# EUROPÄISCHE PATENTSCHRIFT

(11) **EP 1 020 093 B1**
(45) Veröffentlichungstag und Bekanntmachung des Hinweises auf die Patenterteilung: **14.01.2004**
(21) Anmeldenummer: 98951222.3
(22) Anmeldetag: 26.08.1998
(51) Int. Cl.: H04Q 7/38

(54) **OPTIMIERUNG VON NACHBARKANAL-MESSBERICHTEN**
OPTIMIZATION OF ADJACENT CHANNEL MEASURING REPORTS
OPTIMISATION DE RAPPORTS DE MESURE DE VOIES VOISINES

(30) Priorität: 26.09.1997 DE 19742650
(43) Veröffentlichungstag der Anmeldung: 19.07.2000
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE1998/002509
(87) Internationale Veröffentlichungsnummer: WO 1999/017577

(56) Entgegenhaltungen:
- EP-A- 0 454 638
- WO-A-95/04419

## Beschreibung

Die vorliegende Erfindung betrifft ein Verfahren und ein System zur Übertragung von Datenpakten zwischen einer Mobilstation und einer aktuellen Basisstation eines Mobilfunksystems gemäß dem Oberbegriff des Anspruches 1 bzw. dem Oberbegriff des Anspruches 5.

Mobilstationen müssen in Mobilfunknetzen mit sogenannten Mobile Assisted Handover Algorithmen, d. h. mit Algorithmen, die eine von der Mobilstation unterstützte Übergabe der Mobilstation von einer Mobilfunkzelle an die nächste Mobilfunkzelle betreffen, regelmäßig Informationen über Messungen von Nachbarkanälen bzw. von Signalen benachbarter Basisstationen an die aktuelle Basisstation schicken. Diese Informationen werder in sogenannten Meßberichten übermittelt. Im GSM-System werden derartige Meßberichte mit jeweils 13 × 8 + 1 = 6 × (11+6) + 3 = 105 Bits codiert. Damit können Meßdaten für bis zu sechs benachbarte Basisstationen übertragen werden. Für die Frequenz- und Kennungsübertragung (BSIC, Base Station Identity Code) werden 6 × 11 Bits verwendet, für die eigentlichen Meßdaten 6 × 6 Bits und 3 Bits zur Codierung der Anzahl der benachbarten Basisstationen. Die Mobilstation überträgt nur Meßdaten betreffend die sechs am stärksten sendenden benachbarten Basisstationen. Derartige Meßberichte werden im GSM-System alle 104 Zeitrahmen ohne Layer-2-Protokoll (HDLC) von einer Mobilstation an die jeweilige aktuelle Basisstation übertragen. Insbesondere bei voll ausgebauten Netzen und hier insbesondere bei sogenannten hierarchischen Netzen ist es jedoch nicht unbedingt die am stärksten empfangene benachbarte Basisstation, die eine optimale Netzauslastung gewährleistet.

Die Aufgabe der vorliegenden Erfindung ist somit, ein Verfahren und ein System zur Übertragung von Datenpaketen zwischen einer Mobilstation und einer aktuellen Basisstation eines Mobilfunksystems gemäß dem Oberbegriff des Anspruches 1 bzw. dem Oberbegriff des Anspruches 5 bereitzustellen, bei denen die Mobilstation der aktuellen Basisstation Meßberichte übersenden kann, in 'denen jeweils eine möglichst hohe Anzahl benachbarte Basisstationen betreffende Meßdaten enthalten sind.

Diese Aufgabe wird durch ein Verfahren zur Übertragung von Datenpaketen zwischen einer Mobilstation und einer aktuellen Basisstation eines Mobilfunksystems gemäß dem Anspruch. 1 gelöst, bei dem die Mobilstation der aktuellen Basisstation in wiederholter Weise Meßberichte übersendet, in denen jeweils eine Anzahl benachbarte Basisstationen betreffende Meßdaten enthalten sind, und das dadurch gekennzeichnet ist, daß für zumindest eine benachbarte Basisstation, deren Meßdaten bereits in einem früheren Meßbericht von der aktuellen Basisstation empfangen und gespeichert worden sind, in einem späteren Meßbericht Bezugsinformationen enthalten sind, die auf die Meßdaten des jeweiligen früheren Meßberichts verweisen.

Weiterhin wird diese Aufgabe durch ein System zur Übertragung von Datenpaketen zwischen einer Mobilstation und einer aktuellen Basisstation eines Mobilfunksystems gemäß dem Anspruch 5 gelöst, bei dem in der Mobilstation eine Sendeeinrichtung vorgesehen ist, die einer Empfangseinrichtung der aktuellen Basisstation in wiederholter Weise Meßberichte übersendet, in denen jeweils eine Anzahl benachbarte Basisstationen betreffende Meßdaten enthalten sind, und.das dadurch gekennzeichnet ist, daß für zumindest eine benachbarte Bäsisstation, deren Meßdaten bereits in einem früheren Meßbericht von der Empfangseinrichtung der aktuellen Basisstatiön empfangen und in einer Speichereinrichtung der aktuellen Basisstation gespeichert worden sind, in einem späteren Meßbericht Bezugsinformationen enthalten sind, die auf die Meßdaten des jeweiligen früheren Meßberichts verweisen.

Die vorliegende Erfindung gewährleistet somit, daß insbesondere bei voll ausgebauten Netzen, und hier insbesondere bei sogenannten hierarchischen Netzen, bei denen sich im selben Gebiet große, kleine und sehr kleine Zellen überlappen, die Meßberichte jeweils Meßdaten bezüglich einer möglichst großen Anzahl benachbarter Basisstationen enthalten, da in diesem Fall nicht unbedingt die am stärksten empfangene benachbarte Basisstation eine optimal Netzauslastung gewährleistet. Die vorliegende Erfindung erlaubt es andererseits, die Meßberichte mit einer möglichst geringen Anzahl von Bits zu codieren, damit möglichst wenig Bandbreite dafür verbraucht wird. Gemäß der vorliegenden Erfindung werden der aktuellen Basisstation von der Mobilstation bereits bekannte Meßdaten bezüglich benachbarter Basisstationen nicht noch einmal übertragen, sondern einfach durch Bezugsdaten referenziert. Hierdurch kann der Meßbericht effizienter codiert werden, sobald eine benachbarte Basisstation zum zweiten Mal in einem Meßbericht auftaucht. Die dadurch eingesparte Übertragungskapazität kann beispielsweise dafür verwendet werden, Meßdaten bezüglich weiterer benachbarter Basisstationen zu übertragen.

Vorteilhafte Ausgestaltungen der vorliegenden Erfindung sind in den jeweiligen Unteransprüchen angegeben.

Vorteilhafterweise werden dabei frühere Meßberichte in der Mobilstation und der aktuellen Basisstation dergestalt gespeichert, daß in beiden jeweils der oder die.gleichen früheren Meßberichte gespeichert ist bzw. sind, auf den bzw. die in einem späteren Meßbericht verwiesen wird.

Weiterhin wird vorteilhafterweise von der aktuellen Basisstation an die Mobilstation, nachdem von dieser ein Meßbericht übersendet worden ist, eine erste Bestätigungsinformation übersendet, ob sie den Meßbericht empfangen hat. Weiterhin wird von der Mobilstation vorteilhafterweise mit jedem Meßbericht eine zweite Bestätigungsinformation, ob sie die vorangegangene erste Bestätigungsinformation empfangen hat, an die aktuelle Basisstation übersendet.

Gemäß der vorliegenden Erfindung wird damit zwischen der Mobilstation und der aktuellen Basisstation ein dem Layer-2-Protokoll ähnliches Protokoll definiert, mit dessen Hilfe die Mobilstation weiß, wenn die aktuelle Basisstation einen Meßbericht empfangen hat. Von da an ändert die Mobilstation das Format des Meßberichtes und überträgt nicht mehr wiederholt die Kanalnummernreferenz und die Kennung einer benachbarten Basisstation, sondern nur noch eine Bezugsinformation, die sich auf die Position im früher gesendeten Meßbericht bezieht. Auf diese Weise läßt sich die Basisstation mit deutlich weniger Übertragungsplatz referenzieren. In dem freiwerdenden Übertragungsplatz kann die Mobilstation Meßdaten weiterer benachbarter Basisstationen codieren und übertragen.

Im folgenden wird die vorliegende Erfindung anhand eines bevorzugten Ausführungsbeispiels unter Bezug auf die beigefügten Fig. 1 bis 4 näher erläutert, wobei zeigen
Fig. 1 den allgemeinen Aufbau eines Systems zur Übertragung von Datenpaketen zwischen einer Mobilstation und einer aktuellen Basisstation;
Fig. 2 ein Beispiel eines erfindungsgemäßen Protokolls zur Feststellung, welche Meßberichte von der aktuellen Basisstation empfangen wurden;
Fig. 3 ein Diagramm zur Erläuterung des erfindungsgemäßen Prinzips bei verschachtelten Teilkanälen, und
Fig. 4 eine Tabelle mit Beispielen für die Codierung von Meßberichten entsprechend der vorliegenden Erfindung.

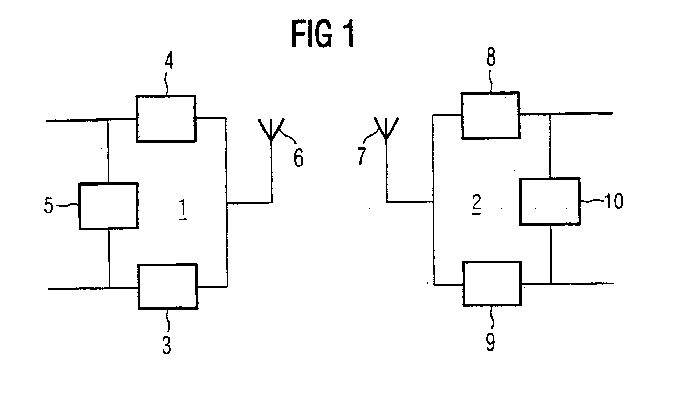

Die Fig. 1 zeigt den allgemeinen Aufbau eines Systems zur Übertragung von Datenpaketen zwischen einer Mobilstation und einer aktuellen Basisstation eines Mobilfunksystems mit einer aktuellen Basisstation 1 und einer Mobilstation 2. Die Basisstation 1 umfaßt eine Empfangseinrichtung 3 und eine Sendeeinrichtung 4 mit einer gemeinsamen Antenne 6. Die Sendeeinrichtung 4 und die Empfangseinrichtung 3 sind mit einer Speichereinrichtung 5 verbunden, in der jeweilige zu einem früheren Zeitpunkt von der Mobilstation 2 empfangene Meßberichte gespeichert werden können. Die Mobilstation 2 umfaßt eine Antenne 7, die mit einer Sendeeinrichtung 8 und einer Empfangseinrichtung 9 verbunden ist. Die Sendeeinrichtung 8 und die Empfangseinrichtung 9 der Mobilstation 2 sind mit einer gemeinsamen Speichereinrichtung 10 verbunden, in der jeweilige an die aktuelle Basisstation 1 übersendete Meßberichte gespeichert werden können.

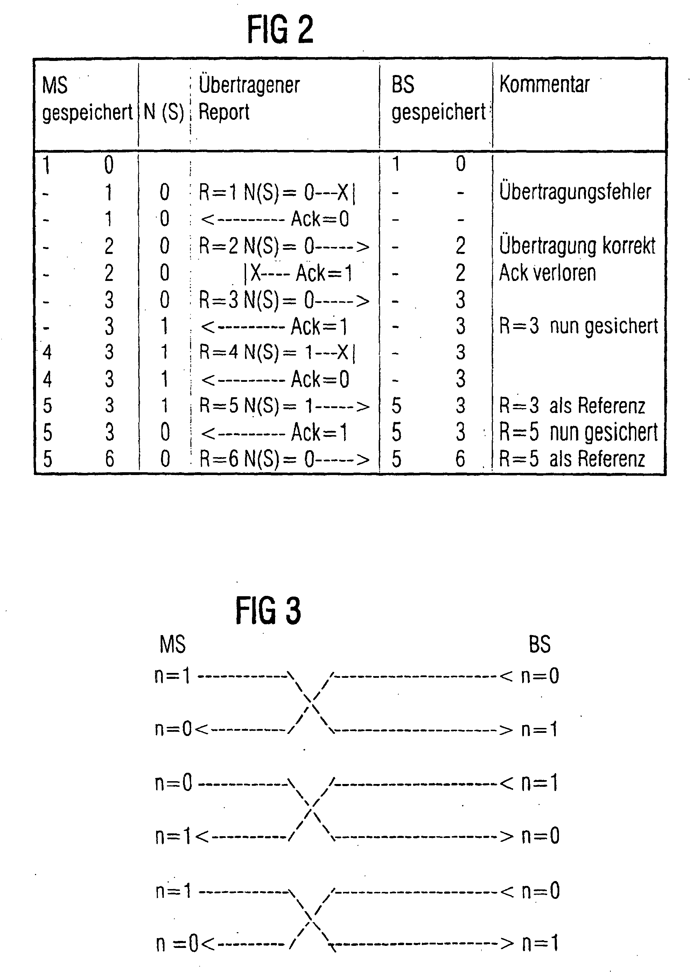

In Fig. 2 ist beispielhaft ein Protokoll zur Feststellung, welche Meßberichte von der Empfangseinrichtung 3 der aktuellen Basisstation 1 empfangen und in der Speichereinrichtung 5 gespeichert wurden, dargestellt. Das erläuterte Protokoll bezieht sich dabei beispielsweise auf die Übertragung von Meßberichten im SDCCH (Stand-alone Dedicated Control Channel).

Von der aktuellen Basisstation 1 wird an die Mobilstation 2, nachdem diese einen Meßbericht übersendet hat, eine erste Bestätigungsinformation in Form eines zusätzlichen Bits Ack von der aktuellen Basisstation 1 an die Mobilstation 2 übersendet. Dieses Bit Ack wird auf Ack = 0 gesetzt, wenn die aktuelle Basisstation 1 den von der Mobilstation 2 übertragenen Meßbericht nicht ordnungsgemäß empfangen hat, wohingegen das Bit Ack auf Ack = 1 gesetzt wird, wenn die aktuelle Basisstation 1 den von der Mobilstation 2 übersendeten Meßbericht ordnungsgemäß empfangen hat.

Die Mobilstation 2 übersendet eine zweite Bestätigungsinformation (N(S) an die aktuelle Basisstation 1, die anzeigt, ob die Mobilstation 2 die vorangegangene erste Bestätigungsinformation, d. h. das Bit Ack ordnungsgemäß empfangen hat. Für den Fall, daß die Mobilstation 2 das Bit Ack von der aktuellen Basisstation ordnungsgemäß empfangen hat, übersendet die Mobilstation 3 die zweite Bestätigungsinformation in Form eines Bits N(S) an die aktuelle Basisstation 1.

Bei Beginn einer Übertragung, z. B. beim Anschalten der Mobilstation 2, setzt die Mobilstation 2 das Bit N(S) = 0 und speichert danach in der Speichereinrichtung 10 die Meßdaten des ersten der aktuellen Basisstation 1 übertragenen Meßberichts für die verschiedenen N(S) gesondert ab. Das Bit N(S) wird dabei in modulo-2 inkrementiert und kann somit die Werte 0 und 1 annehmen. Jedem Meßbericht wird ein Wert des Bits N(S) zugeordnet, wobei in den Speichereinrichtungen 5 bzw. 10 der aktuellen Basisstation 1 bzw. der Mobilstation 2 jeweils eine Datei für Meßberichte mit dem Wert N(S) = 1 und eine Datei für Meßberichte mit dem Wert N(S) = 0 vorgesehen sind. Frühere Meßberichte werden dabei jeweils von späteren Meßberichten mit dem gleichen Wert des Bits N(S) überschrieben.

In Fig. 2 bezeichnet R die Nummer des gerade übertragenen Meßberichts, wobei die Nummer nicht übertragen wird, sondern hier nur zur Referenzierung dient. Unter den beiden Spalten "gespeichert" sind unter den beiden möglichen Werten 0 und 1 von N(S) die Nummern R der Meßberichte, deren Meßdaten die jeweilige Station zum zugehörigen N(S) gespeichert hat, aufgeführt. ---X| bedeutet fehlerhafte Übertragung und -----> fehlerfreie Übertragung.

Bei jedem korrekt empfangenen Meßbericht speichert die aktuelle Basisstation 1 die Meßdaten des empfangenen Meßberichtes für jedes N(S) = 0 bzw. N(S) = 1 in der Speichereinrichtung 5 separat ab und im nächsten Downlink bestätigt die aktuelle Basisstation 1 den Empfang durch Übersenden des Bits Ack mit einem Wert 1 an die Mobilstation 2. Für den Fall, daß die aktuelle Basisstation 1 den Meßbericht nicht empfangen hat, sendet sie das Bit Ack mit einem Wert 0. Empfängt die Mobilstation 2 das Bit Ack mit einem Wert 1, so weiß sie, daß der vorher gesendete Meßbericht von der Basisstation 1 empfangen und in der Speichereinrichtung 5 abgespeichert wurde. Die Mobilstation 2 inkrementiert dann das Bit N(S) in modulo-2 und sendet und speichert den nächsten Meßbericht unter diesem geänderten Wert von N(S). Da nun sowohl die Mobilstation 2 als auch die aktuelle Basisstation 1 die gleiche Nachbaridentitätsinformation für das vorige N(S) gespeichert haben, kann diese Information referenziert werden, um den Meßbericht effizienter zu codieren.

Im in der Fig. 2 gezeigten Beispiel wird der erste Meßbericht (R = 1), der von der Mobilstation 2 an die aktuelle Basisstation 2 übertragen wird, infolge einer fehlerhaften Übertragung nicht von der aktuellen Basisstation 1 empfangen und gespeichert. Die aktuelle Basisstation 1 übersendet daher eine erste Bestätigungsinformation in Form des Bits Ack mit dem Wert 0 an die Mobilstation 2. Bei Übersendung des zweiten Meßberichtes (R = 2) von der Mobilstation 2 an die aktuelle Basisstation 1 wird der erste Meßbericht (R = 1) in der Speichereinrichtung 10 überschrieben, da N(S) weiterhin den Wert 0 behält. Der zweite Meßbericht wird von der aktuellen Basisstation 1 ordnungsgemäß empfangen und in der Speichereinrichtung 5 mit dem Wert N(S) = 0 abgespeichert. Die aktuelle Basisstation 1 übersendet daraufhin der Mobilstation 2 das Bit Ack mit dem Wert 1, um den Empfang des zweiten Meßberichtes zu bestätigen. Bei der Übertragung des Bits Ack von der aktuellen Basisstation 1 zur Mobilstation 2 geschieht ein Übertragungsfehler. Die Mobilstation 2 inkrementiert daher das Bit N(S) nicht und überschreibt den zweiten Meßbericht in der Speichereinrichtung 5 mit dem dritten Meßbericht, da auch diesem der wert N(S) = 0 zugeordnet ist. Auch der dritte Meßbericht (R = 3) wird gemeinsam mit dem Bit N(S) = 0 ordnungsgemäß von der aktuellen Basisstation empfangen und anstelle des zweiten Meßberichts in die Speichereinrichtung 10 geschrieben, da der Wert N(S) = 0 ist.

Die aktuelle Basisstation 1 übersendet wiederum das Bit Ack mit einem Wert von 1 an die Mobilstation 2. Die Mobilstation 2 empfängt das Bit Ack = 1 diesmal ordnungsgemäß und inkrementiert den Wert von N(S) in modulo-2, d. h. der Wert von N(S) wird zu 1. Das hat zur Folge, daß der vierte Meßbericht unter dem Wert N(S) = 1 in der Speichereinrichtung 10 abgespeichert wird. Da sowohl der Mobilstation 2 als auch der aktuellen Basisstation 1 nach Übertragung des dritten Meßberichtes (R = 3) und der ordnungsgemäßen Übertragung des darauffolgenden Bestätigungsbits Ack mit dem Wert 1 an die Mobilstation 2 erfolgte, konnte ab diesem Zeitpunkt der dritte Meßbericht als Referenzmeßbericht verwendet werden. Im vierten Meßbericht kann daher von der Mobilstation 2 auf den dritten Meßbericht Bezug genommen werden, da sie sicher sein kann, daß der dritte Meßbericht in der aktuellen Basisstation ordnungsgemäß empfangen und gespeichert worden war. Bei der Übertragung des vierten Meßberichtes (R = 4) an die aktuelle Basisstation 1 tritt ein Übertragungsfehler auf. Die aktuelle Basisstation 1 überträgt daraufhin das Bit Ack mit einem Wert von 0 an die Mobilstation 2. Dabei behält das Bit N(S) den Wert 1. Der fünfte Meßbericht (R = 5) wird an die Stelle des vierten Meßberichtes unter N(S) = 1 in die Speichereinrichtung 10 eingeschrieben und an die aktuelle Basisstation 1 übertragen. Auch im fünften Meßbericht kann Bezug auf den dritten Meßbericht genommen werden, um gemäß der vorliegenden Erfindung bereits übertragene Meßdaten nicht noch einmal zu übertragen. Dieses Mal empfängt die aktuelle Basisstation 1 den Meßbericht ordnungsgemäß und speichert ihn unter dem Wert N(S) = 1 in der Speichereinrichtung 5 ab. Da die aktuelle Basisstation den fünften Meßbericht ordnungsgemäß empfängt und unter dem Wert N(S) = 1 in der Speichereinrichtung 5 abspeichert, wird das Bit Ack mit dem Wert 1 an die Mobilstation 2 übermittelt. Das Bit N(S) wird daraufhin in der Mobilstation 2 in modulo-2 inkrementiert, d. h. auf 0 gesetzt. Der sechste Meßbericht (R = 6) wird daraufhin an die Stelle des dritten Meßberichtes unter N(S) = 0 in die Speichereinrichtung 10 eingeschrieben und an die aktuelle Basisstation 1 übersendet. Da der Mobilstation 2 zu diesem Zeitpunkt bekannt ist, daß der fünfte Meßbericht unter dem Wert N(S) = 0 in der Speichereinrichtung 5 der aktuellen Basisstation 1 gespeichert ist, kann somit in dem sechsten Meßbericht auf bereits übertragene Meßdaten im fünften Meßbericht Bezug genommen werden.

Das in der Fig. 2 beispielhaft erläuterte Protokoll garantiert, daß für jeden gesendeten Meßbericht beide Partner, d. h. die Mobilstation 2 und die aktuelle Basisstation 1, den gleichen früher gesendeten Meßbericht zum vorherigen Wert von N(S) gespeichert haben. Eine Ausnahme gibt es beim Verbindungsaufbau, da weder die aktuelle Basisstation 1 noch die Mobilstation 2 hier etwas gespeichert haben. Diese Information kann in den gesendeten Meßberichten als bekannt vorausgesetzt werden. Dieses beschriebene Protokoll hat Ähnlichkeiten mit dem an sich bekannten Layer-2-Protokoll, allerdings wird hier nicht die Übertragung eines zuerst an den Layer-2 übergebenen Rahmens garantiert, sondern beide Partner wissen, welcher Rahmen als letztes mit dem zuletzt verwendeten N(S) korrekt übertragen wurde.

Als nächstes wird unter Bezug auf Fig. 3 beispielhaft ein Protokoll zur Feststellung, welche Meßberichte von der aktuellen Basisstation 1 empfangen und gespeichert wurden, für den Fall des TCCH (Traffic Control Channel) erläutert. Bei manchen Kanälen, wie beispielsweise im TCCH, werden die Informationen nicht alternierend übertragen, sondern überlappend, d. h. nach dem Senden eines Zeitrahmens empfängt die Mobilstation als nächstes nicht die Antwort auf diesen Zeitrahmen, sondern auf einen früheren Zeitrahmen. Die erwartete Antwort kommt erst an Stelle k, wobei k > 1, d. h. die Zeitrahmen überkreuzen sich auf dem Übertragungsweg, was auch als Round Trip Delay bezeichnet wird. Das ist im GSM-System für den SACCH (Slow Associated Control Channel) bei TCCHs der Fäll, hier ist k = 2. Trotzdem läßt sich das in Bezug auf Fig. 2 erläuterte Verfahren anwenden, allerdings werden k Kanäle definiert, die von 0 bis k-1 durchnumeriert sind und unabhängig voneinander arbeiten. In Fig. 3 ist ein Beispiel für k = 2 dargestellt, wobei der Teilkanal n = 0 normal und der Teilkanal n = 1 fett markiert sind. Das in Fig. 3 gezeigte Prinzip kann man auch auf k Teilkanäle anwenden.

Im folgenden wird die erfindungsgemäß optimierte Möglichkeit der Codierung von Meßberichten beispielsweise für den Fall des SDCCH erläutert. Der erste Meßbericht (R = 1) wird in konventioneller Weise codiert. Sobald die Mobilstation 2 weiß, daß die aktuelle Basisstation 1 einen Meßbericht mit R = 1 empfangen und in der Speichereinrichtung 5 abgespeichert hat, und die Mobilstation 2 die Parameter dieses Meßberichtes ebenfalls in der Speichereinrichtung 10 gespeichert hat, wird die erfindungsgemäße Codierung angewandt. Für Messungen benachbarter Basisstationen, die solche benachbarte Basisstationen betreffen, die bereits in einem der vorhergehenden Meßberichte übertragen wurden, brauchen die die benachbarte Basisstation charakterisierenden Meßdaten (Frequenz, BSIC) nicht wiederholt werden, es reicht ein Verweis auf den entsprechenden früheren Meßbericht. Beispielsweise können dabei Bezugsdaten, die sich auf die Position beziehen, an der die Meßdaten dieser benachbarten Basisstation innerhalb des früheren Meßberichtes übertragen wurden, genügen. Diese Information läßt sich im Rahmen der Bezugsinformationen mit viel weniger Bits codieren. Beispielsweise kann man am Anfang des Meßberichtes eine Bitkarte einfügen, die angibt, welche benachbarten Basisstationen des früheren Meßberichtes wiederholt werden, unmittelbar gefolgt von den Feldstärkemessungen für diese wiederholten Basisstationen. Anschließend folgen im herkömmlichen Format neue, im früheren Meßbericht noch nicht erwähnte benachbarte Basisstationen. Im nächsten Meßbericht wird das selbe Prinzip angewendet.

Für die Meßberichte sind also nur zu Anfang alle Meßdaten zu übertragen, wiederholte Messungen können sehr viel effizienter codiert werden. Die dadurch frei werdende Übertragungskapazität kann man entweder einsparen oder anderweitig nutzen oder zusätzliche Meßdaten in Bezug auf weitere benachbarte Basisstationen übertragen.

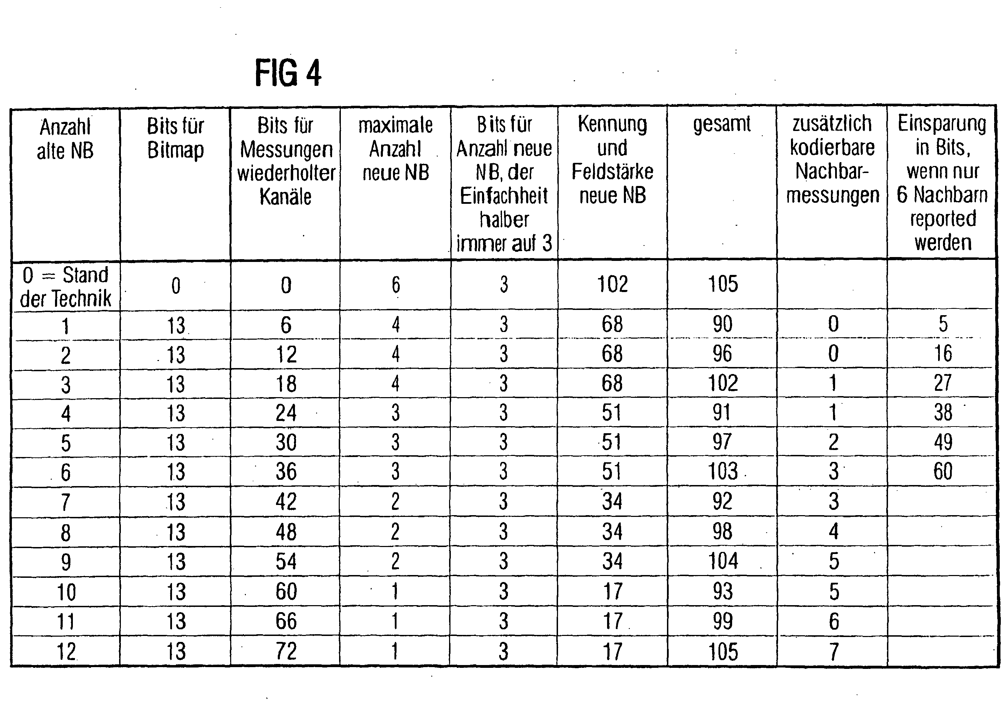

In Fig. 4 sind in einer Tabelle Beispiele für den Aufbau erfindungsgemäßer Meßberichte im Rahmen des GSM-Systems dargestellt. Der normal bekannte Aufbau für sechs benachbarte Basisstationen umfaßt 6 × (11 + 6) + 3 = 105 Bits. Im Rahmen der vorliegenden Erfindung könnte beispielsweise als Codierung für den zweiten Meßbericht folgende Codierung verwendet werden: 6 Bits-Bitkarte + 6 × 6 Bit Feldstärke = 42 Bits zur Codierung der gleichen Information. Um die 105 Bits auszunutzen, können noch zusätzlich in zwei Bits die Anzahl neuer benachbarter Basisstationen und in 3 × 17 Bits drei neue benachbarte Basisstationen codiert werden.

Ein allgemeines Beispiel für das erfindungsgemäße Codierungsverfahren umfaßt eine 12 Bit-Bitkarte für bis zu 12 wiederholte benachbarte Basisstationen, maximal 12 × 6 Feldstärkemessung (je nach Anzahl der Wiederholungen), drei Bits zur Codierung der Anzahl der neuen benachbarten Basisstationen und mindestens 1 × (11 + 6) Bits Kanalkennzeichnung und Feldstärkemessung, je nach freier Kapazität. Die Gesamtsumme ergibt sich zu 12 + 12 × 6 + 3 + 1 × (11 + 6) = 105 Bits.

Damit lassen sich mit dem erfindungsgemäßen Verfahren bis zu sieben zusätzliche benachbarte Basisstationen mit der gleichen Anzahl Bits (105) codieren, wobei das zusätzliche Bit für N(S) noch berücksichtigt werden muß. Bei bis zu zwei wiederholten benachbarten Basisstationen ergibt sich noch keine substantielle Verbesserung, danach können immer mehr zusätzliche benachbarte Basisstationen bis maximal 13 codiert werden. Alternativ läßt sich die Anzahl der benötigten Bits reduzieren; das ist dann sinnvoll, wenn dadurch andere Informationen codiert werden können oder Übertragungsbandbreite gespart werden kann. Die Codierung läßt sich weiter optimieren, wenn man z. B. die Anzahl der neuen benachbarten Basisstationen nicht immer mit drei Bits, sondern mit so vielen Bits wie notwendig codiert. Weiterhin kann vorgesehen sein, daß die wiederholten benachbarten Basisstationen nicht nur aus den benachbarten Basisstationen des letzten Meßberichtes ausgewählt werden können, sondern auch aus den davor übersendeten, wobei jeweils die am längsten nicht mehr erwähnten benachbarten Basisstationen aus der Liste herausfallen. Das ist insbesondere dann vorteilhaft, wenn einzelne benachbarte Basisstationen am Ende der Liste der gespeicherten Meßberichte immer wieder hinein- und herausfallen.

Auch bei Kanälen, bei denen die Informationen überlappend übertragen werden, wie z. B. im TCCH, läßt sich die vorliegende Erfindung auf einfache Weise dadurch anwenden, daß das Prinzip der vorliegenden Erfindung unabhängig für alle Teilkanäle praktiziert wird. Eine weitere Verbesserung kann dabei auftreten, indem, wenn auf einem Teilkanal ein besserer Meßbericht gesendet wurde, d. h. einer, der dem aktuell übersendeten Meßbericht ähnlicher ist, bei dem also mehr benachbarte Basisstationen einfach referenziert werden können, und wenn die Mobilstation 2 weiß, daß die aktuelle Basisstation 1 diesen Meßbericht empfangen und gespeichert hat, auch dieser Meßbericht referenziert werden kann. Dann muß allerdings der Teilkanal k in dem übertragenen Meßbericht ebenfalls codiert werden, wozu im Fall des GSM-Systems ein Bit notwendig ist und zusätzlich das dort gültige Bit N(S). Da die aktuelle Basisstation 1 erst dann weiß, welche Bestätigung die Mobilstation 2 schon empfangen hat, wenn die Mobilstation 2 mit einem neuen N(S) sendet, könnte die aktuelle Basisstation 1 diesen neuen Meßbericht sonst nicht empfangen. Im GSM-System müssen dann zwei Bit zusätzlich verwendet werden.

## Patentansprüche

1. Verfahren zur Übertragung von Datenpaketen zwischen einer Mobilstation und einer aktuellen Basisstation eines Mobilfunksystems, wobei die Mobilstation der aktuellen Basisstation in wiederholter Weise Meßberichte übersendet, in denen jeweils eine Anzahl benachbarte Basisstationen betreffende Meßdaten enthalten sind,
**dadurch gekennzeichnet,**
**daß** für zumindest eine benachbarte Basisstation, deren Meßdaten bereits in' einem früheren Meßbericht von der aktuellen Basisstation empfangen und gespeichert worden sind, in einem späteren Meßbericht Bezugsinformationen enthalten sind, die auf die Meßdaten des jeweiligen früheren Meßberichts verweisen.

2. Verfahren zur Übertragung von Datenpaketen nach Anspruch 1,
**dadurch gekennzeichnet,**
**daß** frühere Meßberichte in der Mobilstation und der aktuellen Basisstation dergestalt gespeichert werden, daß in beiden jeweils der oder die gleichen früheren Meßberichte gespeichert ist bzw. sind, auf den bzw. die in einem späteren Meßbericht verwiesen wird.

3. Verfahren zur Übertragung von Datenpaketen nach Anspruch 1 oder 2,
**dadurch gekennzeichnet,**
**daß** von der aktuellen Basisstation an die Mobilstation, nachdem von dieser ein Meßbericht übersendet worden ist, eine erste Bestätigungsinformation übersendet wird, ob sie den Meßbericht empfangen hat.

4. Verfahren zur Übertragung von Datenpaketen nach Anspruch 1, 2 oder 3,
**dadurch gekennzeichnet,**
**daß** von der Mobilstation mit jedem Meßbericht eine zweite Bestätigungsinformation, ob sie die vorangegangene erste Bestätigungsinformation empfangen hat, an die aktuelle Basisstation übersendet wird.

5. System zur Übertragung von Datenpaketen zwischen einer Mobilstation (2) und einer aktuellen Basisstation (1) eines Mobilfunksystems, wobei in der Mobilstation (2) eine Sendeeinrichtung (8) vorgesehen ist, die einer Empfangseinrichtung (3) der aktuellen Basisstation (1) in wiederholter Weise Meßberichte übersendet, in denen jeweils eine Anzahl benachbarte Basisstationen betreffende Meßdaten enthalten sind,
**dadurch gekennzeichnet,**
**daß** für zumindest eine benachbarte Basisstation, deren Meßdaten bereits in einem früheren Meßbericht von der Empfangseinrichtung (3) der aktuellen Basisstation (1) empfangen und in einer Speichereinrichtung (5) der aktuellen Basisstation (1) gespeichert worden sind, in einem späteren Meßbericht Bezugsinformationen enthalten sind, die auf die Meßdaten des jeweiligen früheren Meßberichts verweisen.

6. System zur Übertragung von Datenpaketen nach Anspruch 5,
**dadurch gekennzeichnet,**
**daß** die Mobilstation (2) eine Speichereinrichtung (10) aufweist und die Speichereinrichtungen (5 bzw. 10) der Mobilstation (2) und der aktuellen Basisstation (1) zur Speicherung früherer Meßberichte dienen, wobei in beiden Speichereinrichtungen (5, 10) jeweils der oder die gleichen früheren Meßberichte gespeichert ist bzw. sind, auf den bzw. die in einem späteren Meßbericht verwiesen wird.

7. System zur Übertragung von Datenpaketen nach Anspruch 5 oder 6,
**dadurch gekennzeichnet,**
**daß** die Sendeeinrichtung (4) der aktuellen Basisstation (1) an die Empfangseinrichtung (9) der Mobilstation (2), nachdem von dieser ein Meßbericht übersendet worden ist, eine erste Bestätigungsinformation übersendet, ob die Empfangseinrichtung (9) der aktuellen Basisstation (1) den Meßbericht empfangen hat.

8. System zur Übertragung von Datenpaketen nach Anspruch 5, 6 oder 7,
**dadurch gekennzeichnet,**
**daß** die Sendeeinrichtung (8) der Mobilstation (1) mit jedem Meßbericht eine zweite Bestätigungsinformation, ob die Empfangseinrichtung (9) der Mobilstation (2) eine vorangegangene erste Bestätigungsinformation empfangen hat, an die Empfangseinrichtung (3) der aktuellen Basisstation (1) übersendet.

## Claims

1. Method for transmitting data packets between a mobile station and a current base station of a mobile radio system, the mobile station of the current base station repeatedly transmitting measurement reports each containing measurement data relating to a number of adjacent base stations, **characterized in that** a later measurement report contains reference information for at least one adjacent base station whose measurement data have already been received by the current base station in an earlier measurement report and stored, said reference information referring to the measurement data of the respective earlier measurement report.

2. Method for transmitting data packets according to Claim 1, **characterized in that** earlier measurement reports are stored in the base station and the current base station in such a way that the same earlier measurement report or reports to which reference is made in a later measurement report is or are respectively stored in both said mobile station and current base station.

3. Method for transmitting data packets according to Claim 1 or 2, **characterized in that** after the mobile station has transmitted a measurement report, the current base station transmits to the mobile station a first acknowledgement information item to acknowledge whether it has received the measurement report.

4. Method for transmitting data packets according to Claim 1, 2 or 3, **characterized in that** with each measurement report the mobile station transmits to the current base station a second acknowledgement information item acknowledging whether it has received the preceding first acknowledgement information item.

5. System for transmitting data packets between a mobile station (2) and a current base station (1) of a mobile radio system, a transmitter device (8) which repeatedly transmits to a receiver device (3) of the current base station (1) measurement reports each containing measurement data relating to a number of adjacent base stations being provided in the mobile station (2), **characterized in that** a later measurement report contains reference information for at least one adjacent base station whose measurement data have already been received by the receiver device (3) of the current base station (1) in an earlier measurement report and stored in a storage device (5) of the current base station (1), said reference information referring to the measurement data of the respective earlier measurement report.

6. System for transmitting data packets according to Claim 5, **characterized in that** the mobile station (2) has a storage device (10), and the storage devices (5 and 10) of the mobile station (2) and of the current base station (1) serve to store earlier measurement reports, in each case the same earlier measurement report or reports to which reference is made in a later measurement report being stored in both storage devices (5, 10).

7. System for transmitting data packets according to Claim 5 or 6, **characterized in that** the transmitter device (4) of the current base station (1) transmits to the receiver device (9) of the mobile station (2), after a measurement report has been transmitted by the latter, a first acknowledgement information item acknowledging whether the receiver device (9) of the current base station (1) has received the measurement report.

8. System for transmitting data packets according to Claim 5, 6 or 7, **characterized in that** with each measurement report the transmitter device (8) of the mobile station (1) transmits to the receiver device (3) of the current base station (1) a second acknowledgement information item acknowledging whether the receiver device (9) of the mobile station (2) has received a preceding first acknowledgement information item.

## Revendications

1. Procédé pour la transmission de paquets de données entre une station mobile et une station de base actuelle d'un système radio mobile, la station mobile transmettant de manière répétitive à la station de base actuelle des rapports de mesure qui contiennent respectivement des données de mesure concernant un nombre de stations de base voisines, **caractérisé en ce que**, pour au moins une station de base voisine dont les données de mesure ont déjà été reçues et enregistrées par la station de base actuelle dans un rapport de mesure antérieur, des informations de référence sont contenues dans un rapport de mesure ultérieur, lesquelles renvoient aux données de mesure du rapport de mesure antérieur respectif.

2. Procédé pour la transmission de paquets de données selon la revendication 1, **caractérisé en ce que** des rapports de mesure antérieurs sont enregistrés dans la station mobile et dans la station de base actuelle de manière telle que le ou les rapport(s) de mesure antérieur(s) enregistré(s) dans chacune des deux est resp. sont le(s) même(s) que celui resp. ceux au(x)quel(s) il est renvoyé dans un rapport de mesure ultérieur.

3. Procédé pour la transmission de paquets de données selon la revendication 1 ou 2, **caractérisé en ce que** la station de base actuelle transmet à la station mobile, après que celle-ci a transmis un rapport de mesure, une première information de confirmation pour signaler si elle a reçu le rapport de mesure.

4. Procédé pour la transmission de paquets de données selon la revendication 1, 2 ou 3, **caractérisé en ce que** la station mobile transmet à la station de base actuelle, avec chaque rapport de mesure, une deuxième information de confirmation pour signaler si elle a reçu la première information de confirmation qui a précédé.

5. Système pour la transmission de paquets de données entre une station mobile (2) et une station de base actuelle (1) d'un système radio mobile, un dispositif émetteur (8) qui transmet des rapports de mesure de manière répétitive à un dispositif de réception (3) de la station de base actuelle (1) étant prévu dans la station mobile (2), lesdits rapports de mesure contenant respectivement des données de mesure concernant un nombre de stations de base voisines, **caractérisé en ce que**, pour au moins une station de base voisine dont les données de mesure ont déjà été reçues par le dispositif récepteur (3) de la station de base actuelle (1) dans un rapport de mesure antérieur et enregistrées dans un dispositif de mémoire (5) de la station de base actuelle (1), des informations de référence sont contenues dans un rapport de mesure ultérieur, lesquelles renvoient aux données de mesure du rapport de mesure antérieur respectif.

6. Système pour la transmission de paquets de données selon la revendication 5, **caractérisé en ce que** la station mobile (2) présente un dispositif de mémoire (10) et **en ce que** les dispositifs de mémoire (5 resp. 10) de la station mobile (2) et de la station de base actuelle (1) servent à enregistrer des rapports de mesure antérieurs, le ou les rapport(s) de mesure antérieur(s) enregistré(s) dans chacun deux dispositifs de mémoire (5, 10) étant le(s) même(s) que celui resp. ceux au(x)quel(s) il est renvoyé dans un rapport de mesure ultérieur.

7. Système pour la transmission de paquets de données selon la revendication 5 ou 6, **caractérisé en ce que** le dispositif émetteur (4) de la station de base actuelle (1) transmet au dispositif récepteur (9) de la station mobile (2), après que celle-ci a transmis un rapport de mesure, une première information de confirmation pour signaler si ledit dispositif récepteur (9) de la station de base actuelle (1) a reçu le rapport de mesure.

8. Système pour la transmission de paquets de données selon la revendication 5, 6 ou 7, **caractérisé en ce que** le dispositif émetteur (8) de la station mobile (1) transmet au dispositif récepteur (3) de la station de base actuelle (1), avec chaque rapport de mesure, une deuxième information de confirmation pour signaler si le dispositif récepteur (9) de la station mobile (2) a reçu une première information de confirmation qui a précédé.
